# EUROPEAN PATENT APPLICATION

(11) **EP 4 692 775 A1**
(43) Date of publication of application: **11.02.2026**
(21) Application number: 24779206.2
(22) Date of filing: 06.03.2024
(51) Int. Cl.: G01N 27/30

(54) **ELECTRODE**

(30) Priority: 27.03.2023 JP 2023050289; 28.12.2023 JP 2023223294
(71) Applicant: Nitto Denko Corporation, Ibaraki-shi Osaka 567-8680 (JP)
(72) Inventor: SUETSUGI, Tomokazu, Ibaraki-shi, Osaka 567-8680 (JP); KATAGIRI, Masayoshi, Ibaraki-shi, Osaka 567-8680 (JP)
(74) Representative: Gill Jennings & Every LLP
(86) International application number: PCT/JP2024/008518
(87) International publication number: WO 2024/203071

(57) **Abstract**

An electrode (1) includes a substrate film (2), a first underlying layer (3), a second underlying layer (4), and a conductive carbon layer (5) in this order toward one side in a thickness direction. The first underlying layer (3) is a metal layer or a metalloid layer, the second underlying layer (4) is a metal layer, and the specific resistance of the first underlying layer (3) is 10 times or more the specific resistance of the second underlying layer (4).

## Description

### TECHNICAL FIELD

The present invention relates to an electrode.

### BACKGROUND ART

Conventionally, a carbon electrode has been known as an electrode (working electrode) used for an electrochemical measurement method.

As such a carbon electrode, for example, an electrode including a film substrate, a titanium thin film, and a carbon thin film in order in the thickness direction has been proposed (for example, see Patent Document 1 below).

Furthermore, as such a carbon electrode, for example, an electrode including a film substrate, a silicon oxide thin film, a titanium thin film, and a carbon thin film in order in the thickness direction has been proposed (for example, see Patent Document 2 below).

### Citation List

### Patent Document

Patent Document 1: PCT International Publication No. WO2019/117112
Patent Document 2: PCT International Publication No. WO2022/019299

### SUMMARY OF THE INVENTION

### PROBLEM TO BE SOLVED BY THE INVENTION

On the other hand, an electrode used for an electrochemical measurement needs a low absolute value of resistance in order to improve the measurement sensitivity, and in addition, requires high reliability in order to ensure the measurement accuracy.

In the carbon electrode of Patent Document 1, the absolute value of resistance can be lowered by the titanium thin film. Meanwhile, the absolute value of resistance may change with time due to outgassing from the film substrate. Thus, higher reliability is desired.

In the electrode of Patent Document 2, the silicon oxide thin film suppresses the outgassing from the film substrate and ensures high reliability. Meanwhile, the silicon oxide thin film oxidizes the titanium thin film at the time of film formation, and thus the absolute value of resistance of the entire electrode may be increased. Therefore, it is desired to further lower the absolute value of resistance of the entire electrode.

The present invention provides an electrode having a low absolute value of resistance and having even higher reliability.

### MEANS FOR SOLVING THE PROBLEM

The present invention [1] includes an electrode including: a substrate film; a first underlying layer; a second underlying layer; and a conductive carbon layer in order toward one side in a thickness direction, wherein the first underlying layer is a metal layer or a metalloid layer, wherein the second underlying layer is a metal layer, and wherein a specific resistance of the first underlying layer is 10 times or more a specific resistance of the second underlying layer.

The present invention [2] includes the electrode described in the above-described [1], wherein the conductive carbon layer has an sp² bond and an sp³ bond.

The present invention [3] includes the electrode described in the above-described [1] or [2], wherein the second underlying layer contains titanium.

The present invention [4] includes the electrode described in the above-described in any one of the above-described [1] to [3], wherein the specific resistance of the second underlying layer is 3.0×10⁻⁴ Ω·cm or less.

The present invention [5] includes the electrode described in any one of the above-described [1] to [4], wherein the first underlying layer is a metalloid layer and contains silicon.

The present invention [6] includes the electrode described in any one of the above-described [1] to [5], wherein the first underlying layer has a thickness of 3 nm or more.

The present invention [7] includes the electrode described in any one of the above-described [1] to [6], being an electrode for electrochemical measurements.

### EFFECTS OF THE INVENTION

The electrode of the present invention has a low absolute value of resistance and also has high reliability.

### BRIEF DESCRIPTION OF THE DRAWINGS

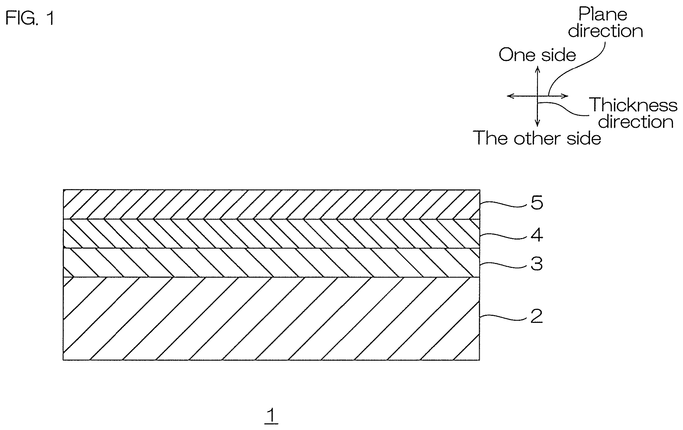

FIG. 1 is a cross-sectional view of one embodiment of an electrode of the present invention.

### DESCRIPTION OF THE EMBODIMENT

### <One Embodiment>

With reference to FIG. 1, one embodiment of the electrode film of the present invention is described. In FIG. 1, the up-down direction on the surface of the drawing sheet is an up-down direction (thickness direction, a first direction). The upper side on the surface of the drawing sheet is an upper side (one side in the thickness direction, one side in the first direction). The lower side on the surface of the drawing sheet is a lower side (the other side in the thickness direction, the other side in the first direction). Furthermore, a right-left direction and a depth direction on the surface of the drawing sheet are plane directions orthogonal to the up-down direction. Specifically, the directions conform to the arrow indicating a direction in each drawing.

As shown in FIG. 1, an electrode 1 has a predetermined thickness. The electrode 1 has a film shape (including a sheet shape). The electrode 1 includes a substrate film 2, a first underlying layer 3, a second underlying layer 4, and a conductive carbon layer 5 in this order toward one side in the thickness direction. Specifically, the electrode 1 includes only the substrate film 2, the first underlying layer 3, the second underlying layer 4, and the conductive carbon layer 5.

### [Substrate Film]

The substrate film 2 is a substrate that supports the first base layer 3, the second base layer 4, and the conductive carbon layer 5. The substrate film 2 is the lowermost layer of the electrode 1 and has a film shape.

The substrate film 2 has a predetermined thickness. Examples of the material of the substrate film 2 include an organic material.

Examples of the organic material include a resin material.

Examples of the resin material include polyester resin, acetate resin, polyether sulfone resin, polycarbonate resin, polyamide resin, polyimide resin, polyolefin resin, acrylic resin, polyvinyl chloride resin, polyvinylidene chloride resin, polystyrene resin, polyvinyl alcohol resin, polyarylate resin, and polyphenylene sulfide resin, and preferably a polyester resin is used.

Examples of the polyester resin include polyethylene terephthalate and polyethylene naphthalate, and preferably, polyethylene terephthalate is used.

The materials of the substrate film 2 can be used alone or in combination.

The thickness of the substrate film 2 is not particularly limited. The thickness of the substrate film 2 is, for example, 2 µm or more, preferably 20 µm or more, more preferably 50 µm or more, and even more preferably 100 µm or more, and is, for example, 1000 µm or less, preferably 500 µm or less, and more preferably 300 µm or less.

### <First Underlying Layer>

The first underlying layer 3 is a layer that suppresses the effect of the substrate film 2 on the second underlying layer 4. The first underlying layer 3 is disposed on a one-side surface of the substrate film 2 in the thickness direction. Specifically, the first underlying layer 3 is in contact with the entire one-side surface of the substrate film 2 in the thickness direction. The first underlying layer 3 has a predetermined thickness.

The first underlying layer 3 may be a metal layer or a metalloid layer. The first underlying layer 3 is preferably not a metal oxide layer or a metalloid oxide layer.

When the first underlying layer 3 is not a metal oxide layer or a metalloid oxide layer, oxidation can be suppressed at the time of formation of the second underlying layer 4 described later. Thus, the absolute value of resistance of the electrode 1 can be lowered.

The metal layer as the first underlying layer 3 consists of metal.

Examples of the metal as the material of the first underlying layer 3 include platinum, tin, tantalum, chromium, palladium, niobium, rhenium, strontium, vanadium, ytterbium, gallium, hafnium, zirconium, titanium, germanium, scandium, lutetium, yttrium, lanthanum, neodymium, thulium, praseodymium, holmium, cerium, erbium, europium, dysprosium, samarium, radium, bismuth, terbium, gadolinium, manganese, and alloys thereof.

The metals as the material of the first underlying layer 3 can be used alone or in combination.

The metalloid layer as the first underlying layer 3 consists of a metalloid. The metalloid is not limited.

Examples of the metalloid as the material of the first underlying layer 3 include silicon.

The metalloids as the material of the first underlying layer 3 can be used alone or in combination.

The first underlying layer 3 is preferably a metalloid layer.

The specific resistance (measured value of the thin film) of the first underlying layer 3 is, for example, 10×10⁻⁶ Ω·cm or more, preferably 4.0×10⁻⁵ Ω·cm or more, more preferably 10×10⁻⁵ Ω·cm or more, even more preferably 5.0×10⁻⁴ Ω·cm or more, particularly preferably 10×10⁻⁴ Ω·cm or more, and is, for example, 1.0×10³ Ω·cm or less.

The specific resistance (measured value of the thin film) of the first underlying layer 3 can be obtained by multiplying the absolute value of resistance (Ω/□) of the single layer of the first underlying layer 3 (in a state where the first underlying layer 3 is formed on the substrate film 2) by the thickness of the first underlying layer 3. Specifically, the specific resistance is measured as described in the Examples below.

Even if the first underlying layer 3 is oxidized by outgassing from the substrate film 2, the effect on the absolute value of resistance of the electrode 1 is small as long as the specific resistance of the first underlying layer 3 is the above-described lower limit or more. Thus, the absolute value of resistance of the electrode 1 can be lowered.

The thickness of the first underlying layer 3 is not particularly limited. The thickness of the first underlying layer 3 is, for example, 1 nm or more, preferably 3 nm or more, and for example, 50 nm or less, preferably 25 nm or less, more preferably 10 nm or less.

When the thickness of the first underlying layer 3 is the above-described lower limit or more, the first underlying layer 3 has excellent evenness over the surface direction. Furthermore, it is also possible to suppress the permeation of the outgas from the substrate film 2, and it is also possible to suppress the change of the absolute value of resistance of the second underlying layer 4 (described later) with time, and the electrode 1 has excellent reliability.

### <Second Underlying Layer>

The second underlying layer 4 is disposed on a one-side surface of the first underlying layer 3 in the thickness direction. Specifically, the second underlying layer 4 is in contact with the entire one-side surface of the first underlying layer 3 in the thickness direction. The second underlying layer 4 has a predetermined thickness.

Examples of the second underlying layer 4 include a metal layer.

The metal layer as the second underlying layer 4 consists of metal.

As the metal as the material of the second underlying layer 4, preferably a metal capable of forming a carbide with the carbon of the conductive carbon layer 5 described below is used.

From the viewpoint of ensuring the chemical stability of the conductive carbon layer 5, examples of the metal as the material of the second underlying layer 4 include silver, copper, gold, aluminum, magnesium, rhodium, tungsten, iridium, cobalt, nickel, ruthenium, indium, osmium, iron, platinum, tin, tantalum, chromium, palladium, niobium, rhenium, strontium, vanadium, ytterbium, gallium, hafnium, zirconium, titanium, germanium, scandium, lutetium, yttrium, lanthanum, neodymium, thulium, praseodymium, holmium, cerium, erbium, europium, dysprosium, samarium, radium, bismuth, terbium, gadolinium, molybdenum, and manganese, and preferably titanium and niobium are used.

The metals as the material of the second underlying layer 4 can be used alone or in combination.

The specific resistance (measured value of the thin film) of the second underlying layer 4 is, for example, 10×10⁻⁴ Ω·cm or less, preferably 5.0×10⁻⁴ Ω·cm or less, more preferably 3.0×10⁻⁴ Ω·cm or less, even more preferably 2.0×10⁻⁴ Ω·cm or less, especially preferably 1.5×10⁻⁴ Ω·cm or less, and, for example, 1.0×10⁻⁷ Ω·cm or more.

The specific resistance (measured value of the thin film) of the second underlying layer 4 can be obtained by multiplying the absolute value of resistance (Ω/□) of the electrode (the electrode including the substrate film 2, the second underlying layer 4, and the conductive carbon layer 5) by the thickness of the second underlying layer 4. In the same manner as the first underlying layer 3, the absolute value of resistance (Ω/□) of the single layer of the second underlying layer 4 may be used. However, the specific resistance of the second underlying layer 4 is sufficiently low with respect to the specific resistance of the conductive carbon layer 5, and thus the effect of the absolute value of resistance (Ω/□) of the conductive carbon layer 5 on the electrode can be ignored. Therefore, the above-describe absolute value of resistance (Q/o) of the electrode can be used. Specifically, the specific resistance is measured as described in the Examples below.

When the specific resistance of the second underlying layer 4 is the above-described upper limit or less, the absolute value of resistance of the electrode 1 can be lowered.

The thickness of the second underlying layer 4 is not particularly limited. The thickness of the second underlying layer 4 is, for example, 1 nm or more, preferably 3 nm or more, more preferably 5 nm or more, and is, for example, 50 nm or less, preferably 30 nm or less.

When the thickness of the second underlying layer 4 is the above-described lower limit or more, the second underlying layer 4 has excellent evenness over the surface direction.

On the other hand, when the thickness of the second underlying layer 4 is the above-described upper limit or less, the second underlying layer 4 also has excellent conductivity.

The specific resistance of the first underlying layer 3 is 10 times or more, preferably 100 times or more, more preferably 1×10³ times or more, even more preferably 1×10⁴ times or more, and is, for example, 1×10²⁰ times or less the specific resistance of the second underlying layer 4.

Even if the first underlying layer 3 is oxidized by the outgassing from the substrate film 2, the effect on the absolute value of resistance of the entire electrode 1 can be suppressed as long as the specific resistance of the first underlying layer 3 is the above-described lower limit of the multiple of the specific resistance of the second underlying layer 4. Thus, a change in the resistance can be suppressed.

### <Conductive Carbon Layer>

The conductive carbon layer 5 is a layer having electrode characteristics and functioning as an electrode. The conductive carbon layer 5 is disposed on a one-side surface of the second underlying layer 4 in the thickness direction. Specifically, the conductive carbon layer 5 is in contact with the entire one-side surface of the second underlying layer 4 in the thickness direction. The conductive carbon layer 5 is the uppermost layer of the electrode 1 and has a predetermined thickness.

The material of the conductive carbon layer 5 is carbon, and preferably carbon having an sp² bond and an sp³ bond. Carbon having an sp² bond and an sp³ bond has a graphite-type structure and a diamond-type structure. The ratio (sp³/sp³+sp²) of the number of sp³ bonded atoms to the sum of the number of sp³ bonded atoms and the number of sp² bonded atoms is not particularly limited. The above-described ratio (sp³/sp³+sp²) is, for example, 0.1 or more, preferably 0.2 or more, and is, for example, 0.9 or less, preferably 0.5 or less. The ratio (sp³/sp³+sp²) is calculated based on the peak intensity of the sp² bond and the peak intensity of the sp³ bond in the spectrum obtained by measuring the one-side surface of the conductive carbon layer 5 in the thickness direction by X-ray photoelectron spectroscopy.

The thickness of the conductive carbon layer 5 is not particularly limited. The thickness of the conductive carbon layers 5 is, for example, 5 nm or more, preferably 8 nm or more, and for example, 200 nm or less, preferably 100 nm or less, more preferably 50 nm or less. The thickness of the conductive carbon layer 5 can be calculated by measuring the X-ray reflectance.

A carbide layer (not shown) is preferably formed at the interface between the conductive carbon layer 5 and the second underlying layer 4. The carbide layer is made of a carbide which is a compound of the metal of the second underlying layer 4 and the carbon of the conductive carbon layer 5. The carbide layer improves the adhesion between the conductive carbon layer 5 and the second underlying layer 4. In this case, the electrode 1 includes the substrate film 2, the first underlying layer 3, the second underlying layer 4, the carbide layer (not shown), and the conductive carbon layer 5 in this order toward one side in the thickness direction.

The conductive carbon layer 5 may contain another element in addition to carbon.

### <Method of Producing Electrode>

Next, the method for producing an electrode 1 is described. First, a substrate film 2 is prepared. Next, a first underlying layer 3, a second underlying layer 4, and a conductive carbon layer 5 are sequentially formed at one side of the substrate film 2 in the thickness direction.

Examples of the method of forming a first underlying layer 3 include a dry method and a wet method. Preferably a dry method is used. Examples of the dry method include a PVD (physical vapor deposition) method and a CVD (chemical vapor deposition) method. As the dry method, preferably a PVD method is used. Examples of the PVD method include a sputtering method, a vacuum vapor deposition method, a laser vapor deposition method, and an ion plating method (arc vapor deposition method) are used. As the PVD method, preferably a sputtering method is used. A sputtering method is not particularly limited. Examples of the sputtering method include an unbalanced magnetron sputtering method (UBM sputtering method), a high-power pulse sputtering method, an electron cyclotron resonance sputtering method, an RF sputtering method, a DC sputtering method (DC magnetron sputtering method), a DC pulse sputtering method, and an ion beam sputtering method.

Furthermore, in the sputtering method, for example, a sputtering gas containing an inert gas and a target consisting of an inorganic material are used. In addition, preferably the sputtering gas does not contain oxygen.

When the sputtering gas does not contain oxygen, oxidation of the metal or metalloid as the material of the first underlying layer 3 can be suppressed.

Examples of the inert gas include argon.

Examples of the material of the first underlying layer 3 include the above-mentioned metals and metalloids, and preferably a metalloid is used.

Examples of the method of forming a second underlying layer 4 include the same method as the above-described method of forming the first underlying layer 3.

Furthermore, from the viewpoint of ensuring the chemical stability of the conductive carbon layer 5, examples of the material of the second underlying layer 4 include the above-described metals, and preferably titanium and niobium are used.

Examples of the method of forming a conductive carbon layer 5 include the same method as the above-described method of forming the first underlying layer 3. When the conductive carbon layer 5 is formed by a sputtering method, examples of the target material include carbon, and preferably sintered carbon is used.

In this manner, an electrode 1 is obtained.

The total thickness of the obtained electrode 1 is, for example, 2 µm or more, preferably 20 µm or more, more preferably 50 µm or more, and even more preferably 100 µm or more, and is, for example, 1000 µm or less, preferably 500 µm or less, and more preferably 300 µm or less.

The absolute value of resistance of the electrode 1 is, for example, 1.0×10³ Ω/□ or less, preferably 5.0×10² Ω/□ or less, more preferably 3.0×10² Q/o or less. The absolute value of resistance can be measured by a method described later.

The rate of change (reliability) of the absolute value of resistance of the electrode 1 is, for example, 50% or less, preferably 10% or less, more preferably 5% or less, even more preferably 3% or less, and particularly preferably 1% or less. The rate of change (reliability) of the absolute value of resistance can be measured by a method described later.

### <Operations and Effects>

The electrode 1 includes a substrate film 2, a first underlying layer 3, a second underlying layer 4, and a conductive carbon layer 5 in this order toward one side in the thickness direction; the first underlying layer 3 is a metal layer or a metalloid layer; the second underlying layer 4 is a metal layer; and the specific resistance of the first underlying layer 3 is 10 times or more the specific resistance of the second underlying layer 4. Thus, the electrode 1 has a low absolute value of resistance and high reliability.

More specifically, the electrode 1 includes the first underlying layer 3 at one side of the substrate film 2 in the thickness direction, and thus the permeation of the outgas from the substrate film 2 can be suppressed, and the oxidation of the second underlying layer 4 can be suppressed.

Even if the first underlying layer 3 is oxidized by the outgas from the substrate film 2, and the absolute value of resistance of the first underlying layer 3 is increased; the specific resistance of the first underlying layer 3 is 10 times or more the specific resistance of the second underlying layer 4. Thus, the effect on the absolute value of resistance of the entire electrode 1 can be suppressed. Therefore, the absolute value of resistance of the electrode 1 can be lowered.

Furthermore, the first underlying layer 3 can suppress the permeation of the outgas from the substrate film 2, and thus suppress the oxidation of the second underlying layer 4. Therefore, the electrode 1 has excellent reliability.

Furthermore, the first underlying layer 3 is a metal or a metalloid, and thus the oxidation of the second underlying layer 4 can be suppressed, and the absolute value of resistance of the electrode 1 can be lowered.

### <Use>

The use of the electrode 1 is not particularly limited. Examples of the use of the electrode 1 include an electrode for electrochemical measurements. Specifically, the electrode 1 is provided in an electrochemical measurement system that includes the electrode 1 as a working electrode.

### Examples

With reference to Examples and Comparative Examples below, the present invention is more specifically described below. The present invention is not limited to Examples and Comparative Examples in any way. The specific numeral values used in the description below, such as blending ratios (content ratios), physical property values, and parameters, can be replaced with the corresponding blending ratios (content ratios), physical property values, and parameters in the above-described "DESCRIPTION OF THE EMBODIMENT", including the upper limit values (numeral values defined with "or less" or "less than") or the lower limit values (numeral values defined with "or more" or "more than").

### Example 1

A substrate film 2 made of polyethylene terephthalate and having a thickness of 188 µm was prepared.

Next, a metalloid layer (first underlying layer 3) made of silicon was formed on the one-side surface of the substrate film 2 in the thickness direction by using a magnetron sputtering method. The conditions for the magnetron sputtering method were as follows.

Target material: silicon
Target Power: 1.1 W/cm²
Sputtering gas: argon
Sputtering chamber pressure: 0.2 Pa

The metalloid layer had a thickness of 5 nm.

Next, a metal layer (second underlying layer 4) made of titanium was formed on the one-side surface of the metalloid layer (first underlying layer 3) in the thickness direction using magnetron sputtering. The conditions for the magnetron sputtering method were as follows.

Target material: titanium
Target Power: 0.4 W/cm²
Sputtering gas: argon
Sputtering chamber pressure: 0.2 Pa

The second underlying layer 4 had a thickness of 8 nm.

Next, a conductive carbon layer 5 was formed on the one-side surface of the second underlying layer 4 in the thickness direction by using a DC pulse sputtering method. The conditions for the DC pulse sputtering method were as follows.

Target material: sintered carbon
Target Power: 3.0 W/cm²
Sputtering gas: argon
Sputtering chamber pressure: 0.2 Pa

The conductive carbon layer 5 had a thickness of 10 nm.

In this manner, the electrode 1 including the substrate film 2, the metalloid layer (the first underlying layer 3), the second underlying layer 4, and the conductive carbon layer 5 in this order toward one side in the thickness direction was produced.

### Example 2

An electrode of Example 2 was produced in the same manner as the electrode of Example 1 except for the following. The thickness of the metalloid layer was set to 3 nm, and a metal layer made of niobium with a thickness of 15 nm was formed on the one-side surface of the metalloid layer (the first underlying layer 3) in the thickness direction. The conditions for the magnetron sputtering method at the time of forming the second underlying layer 4 were as follows.

Target material: niobium
Target Power: 0.4 W/cm²
Sputtering gas: argon
Sputtering chamber pressure: 0.2 Pa

### Example 3 and Example 4

Electrodes of Example 3 and Example 4 were produced in the same manner as the electrode of Example 2 except that the thickness of the metal layer (second underlying layer 4) made of niobium was changed as shown in Table 1.

### Comparative Example 1

The process was carried out in the same manner as in Example 1 except that a first underlying layer 3 was not formed. That is, the electrode 1 included a substrate film 2, a second underlying layer 4, and a conductive carbon layer 5 in this order toward one side in the thickness direction.

### Comparative Example 2

The process was carried out in the same manner as in Example 1 except that a metalloid oxide layer was formed instead of the metalloid layer. That is, a metalloid oxide layer made of silicon oxide was formed on the one-side surface of the substrate film 2 in the thickness direction by using a magnetron sputtering method. The conditions for the magnetron sputtering method were as follows.

Target material: silicon
Target Power: 3.3 W/cm²
Sputtering gas: argon and oxygen (a flow ratio 9:1)
Sputtering Pressure: 0.2 Pa

The metalloid oxide layer had a thickness of 5 nm.

In this manner, an electrode 1 including a substrate film 2, a metalloid oxide layer, a second underlying layer 4, and a conductive carbon layer 5 in this order toward one side in the thickness direction was produced.

### Comparative Examples 3 to 5

The processes were carried out in the same manner as in Examples 2 to 4, respectively, except that first underlying layers 3 were not formed. That is, the electrodes 1 of Comparative Examples 3 to 5 included a substrate film 2, a second underlying layer 4, and a conductive carbon layer 5 in this order toward one side in the thickness direction.

### [Specific Resistance of First Underlying Layer (Measured Value of Thin Film)]

A sample 1 was prepared by forming a metalloid layer (first underlying layer 3) made of silicon on the one-side surface in the thickness direction of substrate film 2 made of polyethylene terephthalate and having a thickness of 188 µm by using magnetron sputtering. The conditions for the magnetron sputtering method at the time of forming the first underlying layer 3 were the same as those in Example 1. The metalloid layer had a thickness of 5 nm.

The absolute value of resistance of the prepared sample 1 was measured in the same manner as described in Evaluations described later. The absolute value of resistance (Ω/□) of the sample 1 exceeded the upper measurement limit (1.0× 10⁷ Ω/□) of the measuring device, and could not be measured. That is, the specific resistance of the silicon thin film with a thickness of 5 nm was larger than 50,000× 10⁻⁴ Ω·cm. The specific resistance of the sample 1 corresponded to the specific resistance (measured value of the thin film) of the first underlying layer of Example 1.

A sample 2 was prepared in the same manner as the sample 1 except that a metalloid layer (first underlying layer 3) made of silicon with a thickness of 3 nm was formed. Then, the absolute value of resistance was measured. The absolute value of resistance of the sample 2 also exceeded the upper measurement limit (1.0× 10⁷ Ω/□) of the measuring device, and could not be measured. That is, the specific resistance of the silicon thin film with a thickness of 3nm was larger than 30,000×10⁻⁴ Ω·cm. The specific resistance of the sample 2 corresponded to the specific resistances (measured values of the thin films) of the first underlying layers of Examples 2 to 4.

A sample 3 was prepared in the same manner as the sample 1 except that the conditions for the magnetron sputtering method were the same as in Comparative Example 2. That is, the sample 3 included a first underlying layer 3 made of a metalloid oxide layer having a thickness of 5 nm on the one-side surface of the substrate film 2 in the thickness direction. The absolute value of resistance of the sample 3 was also measured. The absolute value of resistance of the sample 3 also exceeded the upper measurement limit (1.0× 10⁷ Ω/□) of the measuring device, and could not be measured. That is, the specific resistance of the metalloid oxide layer with a thickness of 5 nm was larger than 50,000× 10⁻⁴ Ω·cm. The specific resistance of the sample 3 corresponded to the specific resistance (measured value of the thin film) of the first underlying layer of Comparative Example 2.

### <Evaluations>

### [Absolute Value of Resistance]

The electrode of each of Examples and Comparative Examples was cut into a size 210×297mm. The absolute value of resistance was measured by eddy-current testing using a NC-80LINE manufactured by NAPSON. The non-contact measuring probe unit was swept in a direction of the long side, and the average value of the sheet resistance values excluding the data on both ends of 10 mm was used as the absolute value of resistance. The absolute values of resistance as results are shown in Table 1. The specific resistance of the second underlying layer 4 (measured value of the thin film) was calculated by multiplying the absolute value of resistance of the electrode of each of Comparative Examples 1 and 3 to 5 by the thickness of the second underlying layer 4. As described above, the specific resistance of the second underlying layer 4 was sufficiently low with respect to the specific resistance of the conductive carbon layer 5, and thus the effect of the absolute value of resistance (Ω/□) of the conductive carbon layer 5 on the electrode was ignored. The results are shown in Table 1. The specific resistances (measured values of the thin films) of the second underlying layers 4 of Comparative Example 1 and Comparative Examples 3 to 5 correspond to the specific resistances (measured values of the thin films) of the second underlying layers 4 of Examples 1 to 4, respectively.

### [Reliability]

In each Example and each Comparative Example, the reliability of the electrode was evaluated by the following method. That is, the electrode of each of Example 1 and Comparative Examples was cut into a size 210×297mm and stored at room temperature in the atmosphere for one month. The absolute values of resistance before and after the storage were measured by the above-described method. From the absolute value of resistance before the storage and the absolute value of resistance after the storage, the rate of change (reliability) of the absolute value of resistance was calculated based on the following formula. The results on the absolute value of resistance are shown in Table 1.

Rate of change of absolute value of resistance (%) = (|Absolute value of resistance before storage-Absolute value of resistance after storage)/Absolute value of resistance before storage × 100.

### [Table 1]

**Table 1**

| | Layer structure | First underlying layer | Second underlying layer (material) | Thickness of second underlying layer (nm) | Evaluation | | Specific resistance of first underlying layer (Ω·cm) | Specific resistance of second underlying layer (Ω·cm) |
|---|---|---|---|---|---|---|---|---|
| | | | | | Absolute value of resistance (Ω/□) | Reliability (rate of change of absolute value of resistance) | | |
| Ex. 1 | Substrate film/First underlying layer/Second underlying layer/Conductive carbon layer | Metalloid layer | Titanium | 8 | 270 | 0% | 5< | 2.08 × 10⁻⁴ |
| Comp. Ex. 1 | Substrate film/Second underlying layer/Conductive carbon layer | - | Titanium | 8 | 260 | 50% | - | 2.08 × 10⁻⁴ |
| Comp. Ex. 2 | Substrate film/First underlying layer/Second underlying layer/Conductive carbon layer | Metalloid oxide layer | Titanium | 8 | 400 | 3% | 5< | - |
| Ex. 2 | Substrate film/First underlying layer/Second underlying layer/Conductive carbon layer | Metalloid layer | Niobium | 15 | 93 | 0% | 3< | 1.74 × 10⁻⁴ |
| Ex. 3 | Substrate film/First underlying layer/Second underlying layer/Conductive carbon layer | Metalloid layer | Niobium | 19 | 33 | 0% | 3< | 6.46 × 10⁻⁵ |
| Ex. 4 | Substrate film/First underlying layer/Second underlying layer/Conductive carbon layer | Metalloid layer | Niobium | 21 | 24 | 0% | 3< | 5.04 × 10⁻⁵ |
| Comp. Ex. 3 | Substrate film/Second underlying layer/Conductive carbon layer | - | Niobium | 15 | 116 | 9% | - | 1.74 × 10⁻⁴ |
| Comp. Ex. 4 | Substrate film/Second underlying layer/Conductive carbon layer | - | Niobium | 19 | 34 | 6% | - | 6.46 × 10⁻⁵ |
| Comp. Ex. 5 | Substrate film/Second underlying layer/Conductive carbon layer | - | Niobium | 21 | 24 | 4% | - | 5.04 × 10⁻⁵ |

The specific resistance (measured value of the thin film) of the first underlying layer used in each Example was 10 times or more the specific resistance (measured value of the thin film) of the second underlying layer. In the measurement of the absolute values of resistance used for the specific resistance (measured value of the thin film) of the first underlying layer and the specific resistance (measured value of the thin film) of the second underlying layer, both of the absolute values of resistance were measured in a state both of the underlying layers included a substrate film. However, the effects of the substrate films were negated with each other, and thus the effects were ignored when the magnification ratios of the specific resistances were compared.

In each Example, the first underlying layer was a metal layer or a metalloid layer, and the specific resistance (measured value of the thin film) of the first underlying layer was 10 times or more the specific resistance (measured value of the thin film) of the second underlying layer. Thus, the electrode is excellent in absolute value of resistance and reliability. On the other hand, Comparative Examples 1 and 3 to 5 did not have a first underlying layer, and thus were inferior in reliability. In Comparative Example 2, the first underlying layer was a metalloid oxide layer, and thus was inferior in absolute value of resistance.

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The electrode of the present invention is preferably used as an electrode for electrochemical measurements.

### Description of Reference Numerals

- 1: Electrode
- 2: Substrate film
- 3: First underlying layer
- 4: Second underlying layer
- 5: Conductive carbon layer

## Claims

1. An electrode comprising: a substrate film; a first underlying layer; a second underlying layer; and a conductive carbon layer in order toward one side in a thickness direction,
wherein the first underlying layer is a metal layer or a metalloid layer,
wherein the second underlying layer is a metal layer, and
wherein a specific resistance of the first underlying layer is 10 times or more a specific resistance of the second underlying layer.

2. The electrode according to claim 1,
wherein the conductive carbon layer has an sp² bond and an sp³ bond.

3. The electrode according to claim 1,
wherein the second underlying layer contains titanium or niobium.

4. The electrode according to claim 1,
wherein the specific resistance of the second underlying layer is 3.0×10⁻⁴ Ω·cm or less.

5. The electrode according to claim 1,
wherein the first underlying layer is a metalloid layer and contains silicon.

6. The electrode according to claim 1,
wherein the first underlying layer has a thickness of 3 nm or more.

7. The electrode according to any one of claims 1 to 6, being an electrode for electrochemical measurements.
